(19) Europäisches Patentamt
European Patent Office
Office européen des brevets

(11) **EP 2 316 899 A1**

(12) **EUROPEAN PATENT APPLICATION**

(43) Date of publication:
**04.05.2011 Bulletin 2011/18**

(51) Int Cl.:
***C09J 7/04*** (2006.01)

(21) Application number: **10188782.6**

(22) Date of filing: **26.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **28.10.2009 JP 2009247977**<br><br>(71) Applicant: **NITTO DENKO CORPORATION**<br>**Ibaraki-shi, Osaka 567-8680 (JP)** | (72) Inventors:<br>• **Wada, Hiroshi**<br>  **Ibaraki-shi Osaka 567-8680 (JP)**<br>• **Shibata, Kazuhiko**<br>  **Ibaraki-shi Osaka 567-8680 (JP)**<br><br>(74) Representative: **Grünecker, Kinkeldey,**<br>  **Stockmair & Schwanhäusser**<br>  **Anwaltssozietät**<br>  **Leopoldstrasse 4**<br>  **80802 München (DE)** |

(54) **Double-sided pressure-sensitive adhesive tape and process for producing the same**

(57)    The present invention provides a double-sided adhesive tape which enables suppression of deterioration of pressure-sensitive adhesive characteristics due to foaming of the surface of a pressure-sensitive adhesive, and occurrence of poor appearance, and is less likely to generate wrinkles in the case of taking up the tape and does not cause interlaminar fracture (delamination) upon peeling even after practical use during which heat history is loaded for a long time, and also which is less likely to be torn off or to generate adhesive residue upon peeling off the double-sided adhesive tape from one side of the adherend, and is excellent in peeling property; and a method for producing the same. Particularly, the present invention provides a method for producing a double-sided adhesive tape, which causes neither generation of wrinkles nor cutting of a nonwoven fabric base material even when a pressure-sensitive adhesive is applied to the nonwoven fabric base material at a higher speed than in the case of the prior art, and also has improved productivity. Disclosed is a double-sided adhesive tape including a nonwoven fabric base material containing substantially no binder component and having a tensile strength in a longitudinal direction of from 4.1 to 10.0 N/10 mm; and a pressure-sensitive adhesive layer provided on both surfaces of the nonwoven fabric base material; wherein the double-sided adhesive tape has an initial tensile strength in the longitudinal direction of 17.0 N/10 mm or more.

EP 2 316 899 A1

**Description**

TECHNICAL FIELD

The present invention relates to a double-sided adhesive tape including a nonwoven fabric as a supporting base material, and a method for producing the same. More particularly, the present invention relates to a double-sided adhesive tape which is excellent in peeling property when the double-sided adhesive tape stuck to an adherend made of plastic, metal and the like is peeled off, and a method for producing the same.

BACKGROUND OF THE INVENTION

A double-sided adhesive tape (including a double-sided adhesive sheet in the present invention) is employed, as junction means having satisfactory workability and high reliability of adhesion, in various industrial fields such as household electrical appliances, automobiles, and OA equipment. From the viewpoint of resource saving, recyclable parts used in products have often been reused by disassembling the products after use, recently. At this time, if the parts are junctioned with each other using the double-sided adhesive tape, it is sometimes required to peel off the double-sided adhesive tape stuck to the parts.

Various proposals have hitherto been made on the double-sided adhesive tape for which re-peeling property is required (see, for example, JP-A-7-70527, JP-A-9-272850, JP-A-2003-253228 and JP-A-2003-193006). Concerning the re-peeling property of the tape, these patent documents describe that the adhesive shall not remain (adhesive residue) even when the tape is peeled off in the recycling step after use of the product; interlaminar fracture (delamination at the base material portion) shall not occur even when parts are disassembled; and the tape shall not be torn off even when the tape is removed by peeling off singly.

However, these patent documents do not mention that tape strength and other characteristics change by heat history and duration of use. Recently, in the case where recycling dealers disassemble and recycle recyclable products after duration of use of 3 to 5 years, a remarkable decrease in strength from the designed tape strength is recognized in a lot of re-peelable double-sided tapes, and thus it has been found that initially designed strength may not be exhibited and interlaminar fracture may occur, resulting in poor re-peeling property.

Specifically, it is reported that the re-peelable double-sided adhesive tape used to junction parts with each other in products such as household electrical appliances, automobiles, and OA equipment causes remarkable deterioration of tape strength in the products collected actually in the recycling step. As a result, when a trial is made to singly peel the tape off during disassembling, since the tape strength is lower than the adhering strength of a pressure-sensitive adhesive tape, the tape is torn off before being peeled off by the force required for peeling and re-peeling property remarkably deteriorates, and thus initially expected performance can not be exhibited.

The reason why the tape strength deteriorates is estimated that a nonwoven fabric fiber per se deteriorates, the strength of a binder used for a nonwoven fabric decreases, or elasticity of the pressure-sensitive adhesive decreases. In the case of a common re-peelable double-sided adhesive tape, heat history and duration of use during use of the product are often designed based on a long-term storage substitute test by storage at about 60°C for about 30 days (corresponding to the assumption of 23°C x 4 years and 4 months/40°C x 7.6 months in accordance with the Arrhenius's law). It is considered that there is a gap in setting of conditions of use of the product between these conditions and actual conditions, or deterioration of tape strength due to storage cannot be evaluated. That is, considering using the method for use of OA equipment, it is known that the temperature inside the equipment rises to about 40°C when a power source is turned on, and that 3 to 4 years are required for almost all of users to collect the products in the state where the power source is on for half a day.

In the recycling step of assembly parts, first, parts junctioned to each other with a double-sided adhesive tape are disassembled by peeling, and then the double-sided adhesive tape adhered to the parts is singly peeled off the parts (adherends). At this time, most of double-sided adhesive tapes without consideration of deterioration of the tape strength cause no problem when used for a short period. However, in the step of peeling (disassembling) parts from each other after use as the product for a long period, the double-sided adhesive tape is fractured at the portion of a nonwoven fabric as a base material (interlaminar fracture), resulting in a state where residues of the double-sided adhesive tape adhere to both surfaces of the disassembled parts after the nonwoven fabric is split into two sections and the split nonwoven fabric is exposed. This operation of removing the residues from the surface of the parts is sometimes the operation with worst efficiency in the recycling step.

Even when such interlaminar fracture does not occur, when the tape strength decreases in the case of singly peeling the double-sided adhesive tape off parts (adherends) upon collection of the product, the tape is torn off during peeling if the adhesive strength of the tape is larger than the tape strength, and thus the tape is not easily peeled off in the recycling step, resulting in deterioration of efficiency.

In addition, even when such interlaminar fracture or tear-off of the tape do not occur, a portion of the pressure-sensitive adhesive remains on the surface of the adherend after peeling in the case of singly peeling the double-sided adhesive tape from the parts (adherends) upon collection of the product (this phenomenon is called adhesive residue in many cases). Therefore, the adhesive must be removed by a spatula or a solvent so as to forward the process to the reuse or remolding step, resulting in deterioration of efficiency of the recycling step. Needless to say, not only prevention of adhesive residue is important, and an excellent pressure-sensitive adhesive characteristic is a precondition therefor.

It was revealed that, as in the double-sided adhesive tape described in JP-A-2003-193006, when a nonwoven fabric base material bound with a binder resin is used, although a nonwoven fabric alone exhibits high strength, the double-sided adhesive tape is insufficient in the strength, resulting in a remarkable decrease in tear strength and a decrease in strength upon recycling.

Although JP-A-9-272850 proposes a double-sided adhesive tape using a nonwoven fabric base material containing no binder resin, it is hard to say that the strength is sufficient since the basis weight is not so large similarly to the case of JP-A-2003-193006. As described in JP-A-2003-253228, when the basis weight of the nonwoven fabric base material is increased, wrinkles are likely to generate in the case of taking up the tape, and also impregnation with the pressure-sensitive adhesive cannot be sufficiently performed, and thus the double-sided adhesive tape may be likely to be fractured at the portion of the nonwoven fabric base material (interlaminar fracture).

JP-A-2006-143856 discloses a double-sided adhesive tape using a specific basis weight of a nonwoven fabric base material containing no binder resin, and a method for producing the same, and describes that a trial is made to improve peeling property and recyclability. However, from the viewpoint of enhancement of performance and functions of a pressure-sensitive adhesive, there is a fear of the occurrence of deterioration of pressure-sensitive adhesive characteristics and poor appearance due to foaming of the surface of the pressure-sensitive adhesive.

Patent Document 1: JP-A-7-70527
Patent Document 2: JP-A-9-272850
Patent Document 3: JP-A-2003-253228
Patent Document 4: JP-A-2003-193006
Patent Document 5: JP-A-2006-143856

SUMMARY OF THE INVENTION

Thus, an object of the present invention is to provide a double-sided adhesive tape which enables suppression of deterioration of pressure-sensitive adhesive characteristics due to foaming of the surface of a pressure-sensitive adhesive, and occurrence of poor appearance, and is less likely to generate wrinkles in the case of taking up the tape and does not cause interlaminar fracture (delamination) upon peeling even after practical use during which heat history is loaded for a long time, and also which is less likely to be torn off or to generate adhesive residue upon peeling off the double-sided adhesive tape from one side of the adherend, and is excellent in peeling property; and a method for producing the same. Particularly, an object of the present invention is to provide a method for producing a double-sided adhesive tape, which causes neither generation of wrinkles nor cutting of a nonwoven fabric base material even when a pressure-sensitive adhesive is applied to the nonwoven fabric base material at a higher speed than in the case of the prior art, and also has improved productivity.

The present inventors have intensively studied about causes and countermeasures for deterioration in strength after practical use so as to achieve the above objects and found that a double-sided adhesive tape, which is particularly excellent in peeling property after practical use, can be obtained by using a nonwoven fabric base material which contains no binder component and also has a tensile strength adjusted within a specific range. Thus, the present invention has been completed.

That is, a double-sided adhesive tape of the present invention is a double-sided adhesive tape comprising a nonwoven fabric base material containing substantially no binder component and having a tensile strength in a longitudinal direction of from 4.1 to 10. 0 N/10 mm; and a pressure-sensitive adhesive layer provided on both surfaces of the nonwoven fabric base material; wherein the double-sided adhesive tape has an initial tensile strength in the longitudinal direction of 17.0 N/10 mm or more.

Preferably, in the double-sided adhesive tape of the present invention, the initial tensile strength in the longitudinal direction of the double-sided adhesive tape is at least twice the tensile strength in the longitudinal direction of the nonwoven fabric base material.

Preferably, in the double-sided adhesive tape of the present invention, the nonwoven fabric base material has a basis weight of 20 g/m$^2$ or more.

Preferably, in the double-sided adhesive tape of the present invention, the nonwoven fabric base material has a thickness of from 50 to 150 $\mu$m.

Preferably, in the double-sided adhesive tape of the present invention, the nonwoven fabric base material is made of Manila hemp.

The double-sided adhesive tape of the present invention preferably has an interlaminar fracture area ratio of 10% or less.

The double-sided adhesive tape of the present invention preferably has a tensile strength in the longitudinal direction after storage at 70°C for 44 days is from 14.0 to 30.0 N/10 mm.

Preferably, in the double-sided adhesive tape of the present invention, in a peeling test after pressure bonding to ABS and after storage at 70°C for 44 days, the tape is peeled off without being torn off.

Preferably, in the double-sided adhesive tape of the present invention, the pressure-sensitive adhesive layer is an acryl-based pressure-sensitive adhesive layer.

The double-sided adhesive tape of the present invention is preferably used for fixation of recycle parts.

Recycle parts in the present invention is preferably recycle parts stuck with the double-sided adhesive tape.

A method for producing the double-sided adhesive tape of the present invention preferably comprises the steps of: applying a raw material liquid of the pressure-sensitive adhesive layer to the nonwoven fabric base material to impregnate the nonwoven fabric base material with the raw material liquid; and drying or curing the raw material liquid to form the pressure-sensitive adhesive layer which is continuous from inside to both surfaces.

The method for producing the double-sided adhesive tape of the present invention preferably comprises the step of impregnating the nonwoven fabric base material with an organic solvent before the step of applying the raw material liquid of the pressure-sensitive adhesive layer to the nonwoven fabric base material to impregnate the nonwoven fabric base material with the raw material liquid.

Preferably, in the method for producing the double-sided adhesive tape of the present invention, the raw material liquid of the pressure-sensitive adhesive layer contains an isocyanate-based crosslinking agent and/or an epoxy-based crosslinking agent.

Preferably, in the method for producing the double-sided adhesive tape of the present invention, the raw material liquid of the pressure-sensitive adhesive layer has a viscosity of from 0.1 to 100 Pa·s at 23°C.

In the present invention, acceleration test conditions (at 70°C for 44 days), which were adopted so as to confirm that a tensile strength of a double-sided adhesive tape is sufficiently maintained after practical use, were determined as follows.

A heat acceleration test is used as a method of estimating behavior of a pressure-sensitive adhesive after storage for a certain period. This method enables estimation of a long-term change in a short time by heating, and it was assumed that the change rate is accelerated in accordance with the Arrhenius's law.

The Arrhenius equation is expressed as follows:

$$K = A \times \exp(-Ea/RT)$$

where K denotes a rate coefficient of reaction, A denotes a frequency factor, Ea denotes activation energy, R denotes a gas constant, and T denotes an absolute temperature (K).

As described in "Nitto Gihou", Vol. 27, No. 2 (Nov. 1989), 21,000 [cal/mol] calculated on the assumption that a shift factor, which is obtained from a mechanical property measured value of an acryl-based pressure-sensitive adhesive using the time temperature reduction law is of the Arrhenius type, was used as Ea (activation energy).

Whereby, rate coefficients of the reaction at 23°C, 40°C and 70°C are as follows.

$$K (23°C) = A \times \exp(-21,000/296R)$$

$$K (40°C) = A \times \exp(-21,000/313R)$$

$$K (70°C) = A \times \exp(-21,000/343R)$$

Using these equations, ratios of rate coefficients of the reaction at both temperatures are as follows.

$$K(70°C)/K(23°C) = 133.3$$

$$K(70°C)/K(40°C) = 19.2$$

Herein, in the actual operation condition of a copying machine, concerning the storage state assuming the general situation where the machine is returned by recycling based on the following achievements:

(1) the average duration of use until returning to recycling: 4 years;
(2) the time ratio in the state where a power source is on in a usual operation condition: 50%; and
(3) the average temperature inside the copying machine when a power source is on: 40°C, estimation calculation is performed in accordance with the above Arrhenius's law. When heat acceleration is preformed at 70°C, the following results are obtained.

State where a power source is on: 40°C @730 days (2 years) is 70°C @38.8 days
*Calculation equation: 730 (days)/19.2 [K (70°C)/K(40°C)] = 38.0 days
State where a power source is not on: 23°C @730 days (2 years) is 70°C @5.5 days
*Calculation equation: 730 (days)/133.3 [K (70°C)/K (23°C)] = 5.5 days
That is, as a result of the summation of the above data, the result is 38.0 + 5.5 = 43.5 ≈ 44 (days).

EFFECTS OF THE INVENTION

Since the double-sided adhesive tape of the present invention is formed of a nonwoven fabric base material which substantially contains no binder component and has a tensile strength in a specific range, and a pressure-sensitive adhesive layer, and thus the double-sided adhesive tape has a tensile strength in a specific range, the double-sided adhesive tape is less likely to generate wrinkles in the case of taking up the tape and does not cause interlaminar fracture (delamination) upon peeling even after practical use during which heat history is loaded for a long time, and is also less likely to be torn off or to generate adhesive residue upon peeling off the double-sided adhesive tape from one side of the adherend, and is excellent in peeling property. Therefore, the double-sided adhesive tape is useful. A method for producing a double-sided adhesive tape of the present invention causes neither generation of wrinkles nor cutting of a nonwoven fabric base material even when a pressure-sensitive adhesive is applied to the nonwoven fabric base material at a higher speed than in the case of the prior art, and exhibits improved productivity, and also enables suppression of deterioration of pressure-sensitive adhesive characteristics due to foaming of the surface of a pressure-sensitive adhesive, and occurrence of poor appearance. Therefore, the method for producing a double-sided adhesive tape of the present invention is useful.

DETAILED DESCRIPTION OF THE PREFERRED EMBODIMENTS

Embodiments of the present invention will be described in detail below.
The double-sided adhesive tape of the present invention includes a nonwoven fabric base material containing substantially no binder component and having a tensile strength in a longitudinal direction of from 4.1 to 10.0 N/10 mm; and a pressure-sensitive adhesive layer provided on both surfaces of the nonwoven fabric base material.
Known materials can be used as the material of the nonwoven fabric base material, and there is no particular limitation. Examples of the material include Manila hemp, rayon, wood fibers, and chemical fibers. Among these nonwoven fabric base materials, a nonwoven fabric base material made only of Manila hemp is preferably used, and a nonwoven fabric base material made only of Manila hemp including thick and long fibers is particularly preferably used so that the strength is easily obtained.
The nonwoven fabric base material containing substantially no binder component is a nonwoven fabric which substantially contains neither a binder resin nor a binder fiber (the content is preferably 0.5% by weight or less). For example, only a Manila hemp fiber is used as a raw material constituting the nonwoven fabric, and there is exemplified a nonwoven fabric produced by using only entanglement of fibers as means for binding the fibers to each other. When a pressure-sensitive adhesive is applied to the nonwoven fabric base material containing substantially no binder component (nonwoven fabric base material made only of constituent fibers), even when the nonwoven fabric base material has a large thickness, the pressure-sensitive adhesive easily penetrates into the space between fibers and the action of adhering the fibers to each other of the pressure-sensitive adhesive increases the tensile strength of the double-sided adhesive tape, and thus delamination of the nonwoven fabric base material is less likely to occur.

The tensile strength in a longitudinal direction (machine direction, MD) of the nonwoven fabric base material is from 4.1 to 10.0 N/10 mm, preferably from 4.1 to 9.0 N/10 mm, and more preferably from 4.1 to 8.0 N/10 mm, under the condition of a tensile speed of 300 mm/minute so as to obtain sufficient strength after impregnation with the pressure-sensitive adhesive. When the tensile strength in the longitudinal direction (machine direction, MD) is less than 4.1 N/10 mm, the nonwoven fabric base material is likely to be cut during production. In contrast, when the tensile strength is more than 10 N/10 mm, there is a fear of deterioration of tape characteristics and impregnation properties of the pressure-sensitive adhesive. Therefore, it is not preferred. When the tensile strength is within the above specific range, even when a pressure-sensitive adhesive is applied to the nonwoven fabric base material at a higher speed than in the case of the prior art, neither generation of wrinkles nor cutting of the nonwoven fabric base material occurs, and productivity is improved. Thus, the double-sided adhesive tape after application and drying of the pressure-sensitive adhesive can maintain the conventional tensile strength and pressure-sensitive adhesive characteristics, and is useful. In the present invention, the tensile strength of the nonwoven fabric base material is measured by the method described hereinafter.

The basis weight of the nonwoven fabric base material is preferably 20 g/m$^2$ or more, more preferably 22 g/m$^2$ or more, and particularly preferably from 22 to 26 g/m$^2$ or more. When the basis weight is less than 20 g/m$^2$, it becomes difficult to control the initial strength of the double-sided adhesive tape to 17.0 N/10 mm.

The thickness of the nonwoven fabric base material is preferably from 50 to 150 $\mu$m, more preferably from 60 to 140 $\mu$m, and particularly preferably from 70 to 130 $\mu$m. When the thickness is less than 50 $\mu$m, sufficient strength cannot be obtained. In contrast, when the thickness is more than 150 $\mu$m, the nonwoven fabric base material is likely to cause delamination, and therefore it is not preferred.

As the raw material liquid of the pressure-sensitive adhesive layer, the following raw material liquid of the pressure-sensitive adhesive layer (pressure-sensitive adhesive) is used. It is possible to use, as the pressure-sensitive adhesive, acryl-based, rubber-based and silicone-based pressure-sensitive adhesive compositions. In the present invention, from the viewpoint of control of impregnation properties, control of an adhesive strength and control of re-peeling property due to adjustment of the viscosity, an acryl-based pressure-sensitive adhesive composition is preferably used.

In order to obtain viscoelastic characteristics described hereinafter, the acryl-based pressure-sensitive adhesive composition preferably contains 100 parts by weight of a homo- or copolymer of an acrylic acid alkyl ester monomer having an alkyl group with 2 to 14 carbon atoms, and 10 to 40 parts by weight of a tackifying resin such as a polymerized rosin ester.

Examples of the acrylic acid alkyl ester monomer having an alkyl group with 2 to 14 carbon atoms include ethyl acrylate, normal butyl acrylate, isobutyl acrylate, isooctyl acrylate, isononyl acrylate, and 2-ethylhexyl acrylate, and the like. It is suitable to use an acrylic acid alkyl ester monomer having an alkyl group with 4 to 9 carbon atoms from the viewpoint of re-peeling property and pressure-sensitive adhesive characteristics. Examples of the acrylic acid alkyl ester monomer having the alkyl group with 4 to 9 carbon atoms include normal butyl acrylate and 2-ethylhexyl acrylate.

A plurality of the above acrylic acid alkyl ester monomers can also be used and there is no particular restriction on the (co)polymerization composition ratio of the entire monomers. The blending ratio is preferably 30% by weight or more from the viewpoint of ease of exertion of the effect, more preferably 60% by weight or more, and particularly preferably 80% by weight or more. It is preferred that normal butyl acrylate or 2-ethylhexyl acrylate alone and/or copolymers thereof are blended in the blending ratio of 30% by weight or more, more preferably 60% by weight or more, and particularly preferably 80% by weight or more, from the viewpoint of pressure-sensitive adhesive characteristics.

In the present invention, any material, for example, a vinyl-based monomer other than the above acryl-based monomer, such as styrene or vinyl acetate; and a monomer such as an acryl-based monomer having an alkyl group which has a functional group may be copolymerized.

The method for polymerization of a main polymer (for example, an acryl-based polymer) contained in the raw material liquid of the pressure-sensitive adhesive layer is not particularly limited, and a known method can be used. In the case of a solvent-based pressure-sensitive adhesive which is suitably used, polymerization can be performed using, as an initiator, in addition to radical-based benzoyl peroxide or AIBN, an anionic initiator, a Ziegler-Natta catalyst, and the like. At this time, although the molecular weight and the molecular weight distribution can be controlled by the polymerization temperature and the polymerization time, it is often preferred that the weight average molecular weight is controlled within a range from 100,000 to 1,000,000.

It is preferred that a tackifying resin as another main material of the pressure-sensitive adhesive is blended with one or more kinds of polymerized rosin esters. The softening point (as measured by the ring and ball method) of the polymerized rosin ester may be any temperature, and is preferably from 80 to 180°C, and is more preferably from 120 to 140°C. The amount is from 10 to 40 parts by weight based on 100 parts by weight of the main polymer.

As the tackifying agent, resins other than the polymerized rosin ester may be used alone or in combination. Examples of the resin include a terpene resin, a coumarone indene resin, a petroleum-based C5 resin, a petroleum-based C9 resin, a petroleum-based C5/C9 resin, a terpenephenol resin, and a hydrogenated product thereof, an ester compound, a polymer and a polymerized rosin, rosin acid, and a rosin acid ester.

In order to obtain a pressure-sensitive adhesive which is less likely to cause adhesive residue, a peak top of a shear loss modulus G" can be controlled according to the above monomer composition ratio, and the softening point and the amount of the above tackifying agent resin. As long as the peak top of G" becomes -45°C or higher and -25°C or lower within the above defined ranges of the monomer and the tackifying agent resin, any monomer composition, any composition ratio and any softening point of the tackifying agent resin may be used. When the peak top of G" is lower than -45°C, if the tape is peeled off after long-term storage, adhesive residue occurs. In contrast, when the peak top is higher than -25°C, parts fixation performance of the pressure-sensitive adhesive tape deteriorates.

There is often used a technique of achieving a balance between coatability of the pressure-sensitive adhesive composition and pressure-sensitive adhesive characteristics after drying by appropriately adding a crosslinking agent. Examples of the crosslinking agent include an isocyanate-based crosslinking agent, an epoxy-based crosslinking agent, metal chelate, carbodiimide, and the like. It is preferred to use an isocyanate-based crosslinking agent and/or an epoxy-based crosslinking agent.

It is also possible to add various additives such as antioxidants, pigments, metal fine powders, fillers, and the like to the pressure-sensitive adhesive composition as long as no adverse influence is exerted on pressure-sensitive adhesive characteristics.

Examples of the solvent or the dispersion medium contained in the raw material liquid of the pressure-sensitive adhesive layer include organic solvents such as ethyl acetate, toluene, methyl ethyl ketone, and methyl isobutyl ketone; and aqueous solvents such as water and alcohol. Among these, toluene is preferably used from the viewpoint of ease of collection of the solvent. Ethyl acetate is preferred from the viewpoint of elimination of VOC. In the present invention, in order to control an interlaminar fracture area ratio described hereinafter to 10% or less, a solvent-based pressure-sensitive adhesive or a photocurable pressure-sensitive adhesive is suitably used.

The viscosity at 23°C of the raw material liquid upon application is preferably from 0.1 to 100 Pa·s, more preferably from 1 to 50 Pa·s, and still more preferably from 5 to 30 Pa·s. It is an effective means to dry the pressure-sensitive adhesive having such a viscosity after directly applying it to a nonwoven fabric. When the viscosity is less than 0.1 Pa·s, the pressure-sensitive adhesive flows and thus it becomes difficult to form a pressure-sensitive adhesive layer having a constant thickness. In contrast, when the viscosity is more than 100 Pa·s, it becomes difficult to impregnate the nonwoven fabric with the pressure-sensitive adhesive and thus an interlaminar fracture ratio increases. It is possible to sufficiently impregnate the inside of the nonwoven fabric base material by using the raw material liquid having a viscosity within the above range even if the thickness of the nonwoven fabric base material is increased. The viscosity of the rawmaterial liquid of the pressure-sensitive adhesive can be controlled by varying the solid concentration of the raw material liquid and the molecular weight of the main polymer contained in the raw material liquid, but is not limited thereto.

As the method of applying the raw material liquid, known methods used in the production of a pressure-sensitive adhesive tape are used, and specific examples thereof include a die coating method, a roll coating method, a gravure coating method, a reverse coating method, a roll brush coating method, a spray coating method, an air knife coating method, and the like. In the present invention, it is preferred that the raw material liquid is applied to both surfaces of the nonwoven fabric base material sequentially or simultaneously.

The thickness of application of the raw material liquid is preferably from 10 to 1000 $\mu$m, and more preferably from 30 to 100 $\mu$m, in terms of the thickness from the nonwoven fabric base material after drying or curing from the viewpoint of maintaining a sufficient adhesive strength.

The method for producing the double-sided adhesive tape of the present invention preferably includes the steps of applying a raw material liquid of the pressure-sensitive adhesive layer (pressure-sensitive adhesive) to the nonwoven fabric base material to impregnate the nonwoven fabric base material with the raw material liquid; and drying or curing the raw material liquid to form the pressure-sensitive adhesive layer which is continuous from inside to both surfaces. By including the above steps, the obtained pressure-sensitive adhesive layer has a structure in which constituent fibers are adhered to each other, and thus sufficient strength can be obtained. When a layer including no pressure-sensitive adhesive layer is formed inside the nonwoven fabric base material, delamination is likely to occur at the portion, and therefore it is not preferred.

According to the method for producing the double-sided adhesive tape of the present invention, since the nonwoven fabric base material is impregnated with the raw material liquid of the pressure-sensitive adhesive layer using the nonwoven fabric base material containing substantially no binder component, a structure in which constituent fibers are adhered to each other is produced, and thus wrinkles are less likely to generate in the case of taking up the tape because of a flexible structure even if the thickness of the nonwoven fabric base material is increased. Since constituent fibers are not bound to each other with a binder, stress concentration is less likely to occur when the tape is torn off and tear strength increases. Furthermore, since the inside of the nonwoven fabric base material is easily impregnated with the pressure-sensitive adhesive, delamination is less likely to occur upon peeling even in the case of a large thickness. The nonwoven fabric base material containing substantially no binder component, which by itself does not have a large strength, shows sufficiently increased strength because of a structure in which constituent fibers are adhered to each other, and also sufficiently maintains sufficient strength even after practical use during which heat history is loaded for a long time because the thickness of the nonwoven fabric base material is increased, and thus the tape is less likely to be torn off upon peeling and therefore the method for producing the double-sided adhesive tape of the present invention is effective.

It is possible to use a drying oven and the like for drying of the raw material liquid. When the raw material liquid of the pressure-sensitive adhesive layer (pressure-sensitive adhesive) is cured by polymerization or crosslinking through irradiation with ultraviolet rays or electron beams, an ultraviolet irradiation system or an electron irradiation system corresponding to each case can be employed. It is also possible that drying and curing are simultaneously performed.

It is preferred that the method for producing the double-sided adhesive tape of the present invention further includes the step of impregnating the nonwoven fabric base material with an organic solvent before the step of applying the raw material liquid of the pressure-sensitive adhesive layer to the nonwoven fabric base material to impregnate the nonwoven fabric base material with the raw material liquid. Before applying the raw material liquid of the pressure-sensitive adhesive for formation of the pressure-sensitive adhesive layer to the nonwoven fabric base material, by impregnating (coating, contacting) the nonwoven fabric base material with an organic solvent, it is possible to remove air between (inside) fibers constituting the nonwoven fabric base material. When the raw material liquid is applied to the nonwoven fabric base material without being contacted with the organic solvent, the surface of the pressure-sensitive adhesive may be roughened when air existing between the fibers is vaporized, thus resulting in poor appearance. Therefore, it is not preferred. By impregnating the nonwoven fabric base material with the organic solvent and thereby removing air (suppressing generation of air bubbles), impregnation of the nonwoven fabric base material with the pressure-sensitive adhesive is improved, thus leading to not only suppression of poor appearance but also prevention of cracking in the case of using the product as the double-sided adhesive tape. Although the detailed reason is not clear, a nonwoven fabric base material having a high tensile strength can be used, which leads to an improvement in productivity. Thus, a preferred aspect is achieved.

The organic solvent can be used without any particular limitation and is selected from the viewpoint of compatibility with the pressure-sensitive adhesive. For example, when the pressure-sensitive adhesive is an acryl-based pressure-sensitive adhesive, the organic solvent to be used is preferably toluene or ethyl acetate and the like, and more preferably toluene or ethyl acetate.

The double-sided adhesive tape thus produced is taken up together with a separator to obtain a product tape. It is possible to suitably use, as the separator, a continuous strip-shaped sheet or film (particularly a continuous strip-shaped sheet or film taken up in the form of a roll). Specific examples of the separator include separators in which a release-treated layer formed of a release treating agent is formed on the surface of a base material; separators made of a plastic film which by itself has an excellent peeling property [for example, a film made of a polyolefin-based resin such as a polyethylene film (a linear low-density polyethylene film, and the like) or an ethylene-α-olefin copolymer film; or a film made of Teflon®, and the like]; and separators obtained by laminating or applying materials of the above plastic film having an excellent peeling property (for example, a polyolefin-based resin such as polyethylene or an ethylene-α-olefin copolymer or Teflon®, and the like) to various construction materials (for example, a metal foil or a heat-resistant plastic film, and the like).

In the double-sided adhesive tape of the present invention, the initial tensile strength in the longitudinal direction is 17 .0 N/10 mm or more, preferably 20 N/10 mm or more, and more preferably from 20 to 35 N/10 mm. When the tensile strength is less than 17.0 N/10 mm, a sufficient strength may not be obtained upon practical use in the case where heat history is applied for a long time, and therefore it is not preferred. It is preferred that the double-sided adhesive tape of the present invention has the similar initial tensile strength not only in the longitudinal direction but also in the transverse direction. By having the similar strength in each direction and also increasing the basis weight of the nonwoven fabric base material, it becomes possible to surely maintain a sufficient strength even after practical use during which heat history is loaded for a long time. The tensile strength of the double-sided adhesive tape of the present invention is measured by the method described hereinafter.

In the double-sided adhesive tape of the present invention, it is preferred that the initial tensile strength in the longitudinal direction of the double-sided adhesive tape is preferably twice or more, more preferably 2.5 times or more, and particularly preferably 3.0 times or more the tensile strength (initial) in the longitudinal direction of the nonwoven fabric base material. When the tensile strength is less than twice, the pressure-sensitive adhesive cannot sufficiently penetrate into the space between fibers, resulting in insufficient impregnation into the nonwoven fabric base material.

In the double-sided adhesive tape of the present invention, an interlaminar fracture area ratio is preferably 10% or less, more preferably 8% or less, particularly preferably 5% or less, and still more preferably 3% or less. When the interlaminar fracture area ratio is 10% or less, assembled parts junctioned to each other with a double-sided adhesive tape can be easily peeled from each other and disassembling properties of constituent parts become satisfactory. In contrast, when the interlaminar fracture area ratio is more than 10%, there is a possibility of a considerable increase in the portion in which the double-sided tape remains in a split state on surfaces of two disassembled parts, in the case of disassembling parts for the purpose of recycling. Since the strength of the nonwoven fabric remarkably decreases, the split portion is not easily peeled off and thus the area of the split portion is doubled. Therefore, disassembling properties of parts remarkably deteriorate.

In the present invention, the interlaminar fracture area ratio is determined by the following procedure. On both surfaces of a double-sided tape cut into a piece measuring 15 x 15 mm in size, an aluminum foil (t = 0.1 mm) cut into a piece measuring 20 x 100 mm in size is laminated. After sufficiently ensuring adhesiveness by storage at 60°C for 24 hours and slowly cooling the laminate to a normal temperature, T-peeling is performed by hands at a rate of about 10 m/min while holding both ends of the aluminum foil by hands. The adhesive surface after peeling is visually observed and the area ratio of the portion fractured between the nonwoven fabric layers is determined.

In the double-sided adhesive tape of the present invention, the tensile strength in the longitudinal direction after storage at 70°C for 44 days is preferably from 14.0 to 30.0 N/10 mm, and more preferably from 20.0 to 26.0 N/10 mm. When the tensile strength is less than 14.0 N/10 mm, the double-sided adhesive tape may be torn off during peeling after storage. In contrast, when the tensile strength is more than 30.0 N/10 mm, deterioration of the nonwoven fabric base material and the pressure-sensitive adhesive layer may occur, and therefore it is not preferred. Since the tape strength after storage of the double-sided adhesive tape may decrease, it is preferred that the tape after storage has the similar tape strength not only in the longitudinal direction but also in the transverse direction.

In the double-sided adhesive tape of the present invention, it is preferred that the tape can be peeled off without being torn off in a peeling test after pressure bonding to ABS and after storage at 70°C for 44 days. When the tape can be peeled off without being torn off in a peeling test after storage, it becomes possible to efficiently perform the re-peeling operation, and therefore the double-sided adhesive tape of the present invention is useful.

In order to control a grain ratio of the double-sided adhesive tape within a suitable range, the grain ratio of the nonwoven fabric base material is preferably from 70 to 140%, and more preferably from 80 to 120%. As used herein, the grain ratio refers to a MD/TD ratio of the strengths of the nonwoven fabric base material and the double-sided adhesive tape in the longitudinal direction (machine direction, MD) and the transverse direction (TD). This grain ratio may be controlled by a paper making method of a nonwoven fabric and any paper making method may be used. In order to approximate the grain ratio to 100%, an inclined-type short net papering method is used in many cases.

The tensile strength means a maximum strength of a single strip-shaped tape (10 mm in width) as measured by TENSILON under the conditions of 23°C /50%, a distance between chucks of 100 mm and a tensile speed of 300 mm/min. The tape strength is measured in two directions, i.e. the longitudinal (machine direction, MD) and the transverse direction (TD). AMD/TD ratio of the strengths of the both corresponds to a grain ratio.

When the strength varies depending on the direction of the peel force applied to the tape, tape strength and processability after processing may decrease, and thus tear-off properties are impaired. Therefore, the initial grain ratio and the grain ratio after storage at 70°C for 44 days of the double-sided adhesive tape is preferably from 70 to 140%, and more preferably from 80 to 120%.

The reason why the tape is torn off during peeling after storage is that a peel force larger than a force to bear peeling of the tape is required. The magnitude of the force is shown more clearly as follows: "tape strength < adhesive strength". In order to prevent the tape from being torn off after storage, the tape strength is preferably larger than the adhesive strength.

The adhesive strength becomes larger than the initial value by long-term storage because wetting of the surface of the adherend with the pressure-sensitive adhesive proceeds with the lapse of time. In order to prevent the tape from being torn off, the tape strength is preferably larger than the adhesive strength. Therefore, it is preferred that the tape strength at 23°C is larger than the adhesive strength at 23°C at the initial stage, and also that the tape strength after storage at 70°C for 44 days is larger than the adhesive strength after storage at 70°C for 44 days.

The adhesive strength of the tape is determined by the following procedure. Before storage, the surface opposite to the sticking surface is detackified with a fine powder (baby powder) , and pressure bonding is performed. Then, the tape is peeled off under the conditions of 23°C /50%, a tensile speed of 300 mm/min and a peel angle of 180º. The obtained adhesive strength is indicated by an average value.

In the present invention, the pressure-sensitive adhesive is preferably a pressure-sensitive adhesive which does not cause adhesive residue even after stuck to the adherend used suitably in OA equipment and household electrical appliances and stored at 70°C for 44 days. The present inventors have intensively studied and found it suitable that the above pressure-sensitive adhesive composition is used as a pressure-sensitive adhesive having excellent resistance to adhesive residue and a peak top of a shear loss modulus G" is -45°C or higher and -25°C or lower.

The shear loss modulus G" is a numerical value obtained by the following procedure. After applying shear vibration at a frequency of 1 Hz on one circular surface of a pressure-sensitive adhesive layer punched into a columnar shape measuring Φ7.5 mm x 1 mm, shear vibration transmitted to the other circular surface is measured and analyzed. In the present measurement, an ARES type manufactured by Rheometric Scientific, Inc. was used.

It is preferred that the double-sided adhesive tape of the present invention is used for fixation of recycle parts. It is particularly useful when the double-sided adhesive tape is used for fixation of recycle parts among parts in products such as household electrical appliances, automobiles and OA equipment.

It is preferred that the recycle parts of the present invention are those with the double-sided adhesive tape stuck thereon.

EXAMPLES

Examples illustrating specifically constitutions and effects of the present invention will be described below. Evaluation items in examples and the like were measured by the following procedures.

<Tensile strength in longitudinal direction of nonwoven fabric>

The tensile strength means a maximum strength of a single strip-shaped nonwoven fabric (10 mm in width) cut so that a tensile direction corresponds to a longitudinal direction, as measured by TENSILON under the conditions of 23°C /50%, a distance between chucks of 100 mm and a tensile speed of 300 mm/min.

<Grain ratio of nonwoven fabric>

The tensile strength of a nonwoven fabric cut so that a tensile direction corresponds to a width direction in the same manner as in the case of measuring the tensile strength in the longitudinal direction of the nonwoven fabric was measured. A MD/TD ratio of the strengths in a longitudinal direction (machine direction (MD)) and a transverse direction (TD) was calculated as a grain ratio.

<Viscosity of raw material liquid of pressure-sensitive adhesive layer>

Using a BH type rotary viscometer manufactured by TOKIMEC, Inc., the viscosity of a pressure-sensitive adhesive composition controlled to a temperature of 23°C was measured using a rotor at 20 rpm.

<Shear loss modulus G" of pressure-sensitive adhesive layer>

Using an ARES type manufactured by Rheometric Scientific, Inc., shear vibration at a frequency of 1 Hz was applied on one circular surface of a pressure-sensitive adhesive layer punched into a columnar shape measuring Φ7.5 mm × 1 mm, and then a shear loss modulus G" was measured by measuring and analyzing shear vibration transmitted to the other circular surface. In that case, while varying a sample temperature, a shear loss modulus G" was plotted and the temperature corresponding to the peak top was determined.

<Tensile strength in longitudinal direction of double-sided adhesive tape>

A maximum strength of a strip-shaped double-sided adhesive tape (10 mm in width) cut so that a tensile direction corresponds to a longitudinal direction, as measured by TENSILON under the conditions of 23°C /50%, a distance between chucks of 100 mm and a tensile speed of 300 mm/min is shown. Regarding the tensile strength in the longitudinal direction of the double-sided adhesive tape, the initial tensile strength and the tensile strength after storage at 70°C for 44 days were measured.

<Grain ratio of double-sided adhesive tape>

In the same manner as in the case of measuring the tensile strength in the longitudinal direction of the double-sided adhesive tape, the tensile strength of the double-sided adhesive tape cut so that a tensile direction corresponds to a width direction was measured. Regarding the tensile strength in the transverse direction of the double-sided adhesive tape, the initial tensile strength and the tensile strength after storage at 70°C for 44 days were measured. A MD/TD ratio of the strengths in a longitudinal direction (machine direction (MD)) and a transverse direction (TD) was calculated as a grain ratio.

<Adhesive strength of double-sided adhesive tape>

The adhesive strength of the tape was determined by the following procedure. A sample obtained by detackifying one surface of a double-sided adhesive tape with a fine powder (baby powder) was cut in a width of 20 mm. The sample was pressure-bonded to an SUS-304 plate with a surface polished by a sand paper (#280) using a load roller (2 kg). After standing under the conditions of 23°C /50%RH for 30 minutes, the tape was peeled off under the conditions of 23°C /50%, a tensile speed of 300 mm/min and a peel angle of 180º using a tensile testing machine. The obtained adhesive strength is averaged.

<Interlaminar fracture area ratio of double-sided adhesive tape>

An interlaminar fracture area ratio was determined by the following procedure. On both surfaces of a double-sided tape cut into a piece measuring 15 × 15 mm in size, an aluminum foil (t = 0.1 mm) cut into a piece measuring 20 × 100 mm in size was laminated. After sufficiently ensuring adhesiveness by storage at 60°C for 24 hours and slowly cooling the laminate to a normal temperature, T-peeling was performed by hands at a rate of about 10 m/min while holding both ends of the aluminum foil by hands. The adhesive surface after peeling was visually observed and the area ratio of the portion fractured between the nonwoven fabric layers was determined.

<Appearance upon taking up of tape>

After winding a 0.14 mm-thick double-sided tape around a paper core having an outer diameter of 82 mm in a state where the double-sided tape is laminated on one surface of a release paper with both surfaces treated with silicone, and rewinding the double-sided tape, the surface of the double-sided tape was visually observed. The case where earthworm-like wrinkles were generated in a transverse direction was rated poor, the case where earthworm-like wrinkles were not generated was rated good, and the case where foaming was recognized was rated acceptable.

<Peeling test after storage at 70°C for 44 days>

One surface of a double-sided tape measuring 5 mm in width x 150 mm was detackified with a fine powder (baby powder), and PCABS and ABS were pressure-bonded to the other non-detackified pressure-sensitive adhesive surface by a single reciprocating motion with a roller (2 kg). The obtained sample was stored in an exposed state at 70°C for 44 days. After the storage, the sample was allowed to stand under the condition of 23°C /50%RH for 24 hours. The peeling property was evaluated by peeling off the pressure-bonded tape by hands at a rate of about 5 mm/minute. The case where the tape was torn off was rated poor), and the case where the tape was peeled off without being torn off was rated good). Adhesive residue was evaluated by visually observing the surface of the adherend after peeling the tape off. The case where no adhesive residue was observed was rated good, the case where the adhesive slightly remained (area ratio was about 30% or less) was rated acceptable, and the case where considerable adhesive residue was observed was rated poor.

(Preparation Example 1 of pressure-sensitive adhesive)

In a three-necked flask, 3 parts by weight of acrylic acid, 4 parts by weight of vinyl acetate, 93 parts by weight of butyl acrylate, and 100 parts by weight of ethyl acetate as a polymerization solvent were charged, followed by stirring for 2 hours while introducing a nitrogen gas. After introducing oxygen in a polymerization system in such a manner, 0.15 parts by weight of AIBN (2,2'-azobisisobutylonitrile) was added and a polymerization reaction was carried out for 6 hours by heating to 70°C to give a polymer solution. The obtained polymer had a weight average molecular weight of 700,000.
To 100 parts by weight of the solid content of this polymer solution, 40 parts by weight of polymerized rosin "Pencel D125" manufactured by Arakawa Chemical Industries, Ltd. was added to prepare a pressure-sensitive adhesive composition. Furthermore, 1.4 parts by weight of an isocyanate-based crosslinking agent (Colonate L, manufactured by Nippon Polyurethane Industry Co., Ltd.) was added to 100 parts by weight of the solid content of this composition, followed by well stirring while adjusting the concentration with a solvent to prepare an acryl-based pressure-sensitive adhesive having a solid content of 35%. This acryl-based pressure-sensitive adhesive showed a viscosity at 23°C of 10 Pa·s, and the obtained pressure-sensitive adhesive layer showed a peak top temperature of a shear loss modulus G" of -25°C.

(Preparation Example 2 of pressure-sensitive adhesive)

In a three-necked flask, 3 parts by weight of acrylic acid, 4 parts by weight of vinyl acetate, 93 parts by weight of butyl acrylate, and 200 parts by weight of toluene as a polymerization solvent were charged, followed by stirring for 2 hours while introducing a nitrogen gas. After introducing oxygen in a polymerization system in such a manner, 0.15 parts by weight of AIBN (2,2'-azobisisobutylonitrile) was added and a polymerization reaction was carried out for 10 hours by heating to 60°C to give a polymer solution. The obtained polymer had a weight average molecular weight of 700,000.
To 100 parts by weight of the solid content of this polymer solution, 40 parts by weight of polymerized rosin "Pencel D125" manufactured by Arakawa Chemical Industries, Ltd. was added to prepare a pressure-sensitive adhesive composition. Furthermore, 0.05 parts by weight of an epoxy-based crosslinking agent (TETRAD-C, manufactured by Mitsubishi Gas Chemical Company, Inc.) was added to 100 parts by weight of the solid content of this composition, followed by well stirring while adjusting the concentration with a solvent to prepare an acryl-based pressure-sensitive adhesive having a solid content of 28%. This acryl-based pressure-sensitive adhesive showed a viscosity at 23°C of 30 Pa·s, and the obtained pressure-sensitive adhesive layer showed a peak top temperature of a shear loss modulus G" of -25°C.

(Preparation Example 3 of pressure-sensitive adhesive)

In a three-necked flask, 3 parts by weight of acrylic acid, 4 parts by weight of vinyl acetate, 93 parts by weight of butyl acrylate, and 200 parts by weight of toluene as a polymerization solvent were charged, followed by stirring for 2 hours while introducing a nitrogen gas. After introducing oxygen in a polymerization system in such a manner, 1.4 parts by weight of AIBN (2,2'-azobisisobutylonitrile) was added and a polymerization reaction was carried out for 10 hours by heating to 60°C to give a polymer solution. The obtained polymer had a weight average molecular weight of 700,000.

To 100 parts by weight of the solid content of this polymer solution, 40 parts by weight of polymerized rosin "Pencel D125" manufactured by Arakawa Chemical Industries, Ltd. was added to prepare a pressure-sensitive adhesive composition. Furthermore, 0.05 parts by weight of an isocyanate-based crosslinking agent (Colonate L, manufactured by Nippon Polyurethane Industry Co., Ltd.) was added to 100 parts by weight of the solid content of this composition, followed by well stirring while adjusting the concentration with a solvent to prepare an acryl-based pressure-sensitive adhesive having a solid content of 40%. This acryl-based pressure-sensitive adhesive showed a viscosity at 23°C of 120 Pa·s, and the obtained pressure-sensitive adhesive layer showed a peak top temperature of a shear loss modulus G" of -25°C.

(Example 1)

First, ethyl acetate was directly applied to a top surface and an under surface of a nonwoven fabric which is made only of Manila hemp and contains no binder component (tensile strength in a longitudinal direction: 5 N/10 mm, grain ratio: 85%, thickness: 75 $\mu$m, basis weight: 22 g/m$^2$) from die coaters positioned on each of the top surface and the under surface. Then, a raw material liquid of the acryl-based pressure-sensitive adhesive obtained in Preparation Example 1 of pressure-sensitive adhesive was directly applied to the nonwoven fabric, thereby impregnating the inside of the nonwoven fabric with the raw material liquid, and then the raw material liquid was dried in an oven of 100°C for 2 minutes to form a pressure-sensitive adhesive layer which is continuous from inside to both surfaces. The obtained product was wound around a paper tube (82 mm in outer diameter), together with a silicone-coated wood free paper with a 140 $\mu$m-thick polyethylene laminate formed on both surfaces to produce a double-sided adhesive tape of the present invention (total thickness of the double-sided adhesive tape: 160 $\mu$m). Using this double-sided adhesive tape, various evaluation tests described above were carried out.

(Example 2)

First, toluene was directly applied to a top surface and an under surface of a nonwoven fabric which is made only of Manila hemp and contains no binder component (tensile strength in a longitudinal direction: 7 N/10 mm, grain ratio: 105%, thickness: 110 $\mu$m, basis weight: 25 g/m$^2$) from die coaters positioned on each of the top surface and the under surface. Then, a raw material liquid of the acryl-based pressure-sensitive adhesive obtained in Preparation Example 2 of pressure-sensitive adhesive was directly applied to the nonwoven fabric, thereby impregnating the inside of the nonwoven fabric with the raw material liquid, and then the raw material liquid was dried in an oven of 100°C for 2 minutes to form a pressure-sensitive adhesive layer which is continuous from inside to both surfaces. The obtained product was wound around a paper tube (82 mm in outer diameter), together with a silicone-coated wood free paper with a 140 $\mu$m-thick polyethylene laminate formed on both surfaces to produce a double-sided adhesive tape of the present invention (total thickness of the double-sided adhesive tape: 160 $\mu$m). Using this double-sided adhesive tape, various evaluation tests described above were carried out.

(Example 3)

In the same manner as in Example 2, except that the step of directly applying toluene was not included before directly applying the raw material liquid of the acryl-based pressure-sensitive adhesive obtained in Preparation Example 2 of pressure-sensitive adhesive in Example 2, a double-sided adhesive tape of the present invention was produced (total thickness of the double-sided adhesive tape: 160 $\mu$m). Using this double-sided adhesive tape, various evaluation tests described above were carried out.

(Comparative Example 1)

First, ethyl acetate was directly applied to a top surface and an under surface of a nonwoven fabric which is made only of Manila hemp and contains no binder component (tensile strength in a longitudinal direction: 4 N/10 mm, grain ratio: 105%, thickness: 75 $\mu$m, basis weight: 23 g/m$^2$) from die coaters positioned on each of the top surface and the under surface. Then, a raw material liquid of the acryl-based pressure-sensitive adhesive obtained in Preparation Example 1 of pressure-sensitive adhesive was directly applied to the nonwoven fabric, thereby impregnating the inside of the nonwoven fabric with the raw material liquid, and then the raw material liquid was dried in an oven of 100°C for 2 minutes to form a pressure-sensitive adhesive layer which is continuous from inside to both surfaces. The obtained product was wound around a paper tube (82 mm in outer diameter), together with a silicone-coated wood free paper with a 140 $\mu$m-thick polyethylene laminate formed on both surfaces to produce a double-sided adhesive tape of the present invention (total thickness of the double-sided adhesive tape: 160 $\mu$m). Using this double-sided adhesive tape, various evaluation tests described above were carried out.

(Comparative Example 2)

In the same manner as in Example 1, except that a nonwoven fabric base material obtained by bounding Manila hemp with 1% by weight of polyvinyl alcohol (a binder component) (tensile strength in a longitudinal direction: 13 N/10 mm, grain ratio: 88%, thickness: 62 mm, basis weight: 18 g/m$^2$) was used as the nonwoven fabric base material in Example 1, a double-sided adhesive tape was produced (total thickness of the double-sided adhesive tape: 160 $\mu$m). Using this double-sided adhesive tape, various evaluation tests described above were carried out.

(Comparative Example 3)

In the same manner as in Example 1, except that a pressure-sensitive adhesive layer was formed by a transfer method in place of forming a pressure-sensitive adhesive layer by directly applying a raw material liquid of an acryl-based pressure-sensitive adhesive (a direct application method) in Example 1, a double-sided adhesive tape was produced (total thickness of the double-sided adhesive tape: 160 $\mu$m). In the transfer method, the raw material liquid of the pressure-sensitive adhesive used in Example 1 was applied to a release-treated surface of a separator and dried in an oven of 100°C for 2 minutes so that the thickness of the adhesive became 70 $\mu$m after drying, and then the pressure-sensitive adhesive layer was heat-transferred to a nonwoven fabric base material to produce a double-sided adhesive tape, and various evaluation tests described above were carried out.

(Comparative Example 4)

In the same manner as in Example 1, except that a raw material liquid of the acryl-based pressure-sensitive adhesive obtained in Preparation Example 3 of pressure-sensitive adhesive was used as the raw material liquid of the acryl-based pressure-sensitive adhesive layer in Example 1, a double-sided adhesive tape of the present invention was produced (total thickness of the double-sided adhesive tape: 160 $\mu$m). Using this double-sided adhesive tape, various evaluation tests described above were carried out. Since the raw material liquid of the acryl-based pressure-sensitive adhesive layer had high viscosity, during application to a nonwoven fabric base material, it was impossible to sufficiently impregnate the inside of the fabric with the raw material liquid, and to form a pressure-sensitive adhesive layer which is continuous from inside to both surfaces.

The above results are shown in Table 1.

Table 1

| Evaluation results | | | Example | | | Comparative Example | | | |
|---|---|---|---|---|---|---|---|---|---|
| | | | 1 | 2 | 3 | 1 | 2 | 3 | |
| Nonwoven fabric base material | Basis weight (g/m$^2$) | | 22 | 25 | 25 | 23 | 18 | 20 | 20 |
| | Thickness ($\mu$m) | | 75 | 110 | 110 | 75 | 62 | 75 | 75 |
| | Presence or absence of binder component | | absent | Absent | Absent | Absent | Present | Absent | Absent |
| | Tensile strength (N/10 mm) | | 5 | 7 | 7 | 4 | 13 | 5 | 5 |
| Presence or absence of solvent application upon production | | | Present | Present | Absent | Present | Present | Absent (Transfer) | Present |
| Double-sided adhesive tape | Tensile strength (N/10 mm) | Initial stage | 23 | 30 | 29 | 29 | 13 | 10 | 10 |
| | | After storage | 20 | 24 | 24 | 25 | 9 | 7 | 6 |
| | Grain ratio (%) | Initial stage | 87 | 110 | 109 | 107 | 100 | 90 | 110 |
| | | After storage | 85 | 101 | 102 | 102 | 98 | 83 | 101 |
| | Appearance | | Good | Good | Acceptable Foaming | Poor Wrinkles | Poor Wrinkles | Good | Good |
| | Adhesive strength (N/20 mm) | | 18 | 18 | 15 | 14 | 12 | 13 | 14 |
| | Interlaminar fracture area ratio (%) | | 2 | 3 | 3 | 3 | 3 | 80 | 100 |
| | Peeling test after storage | Tear-off | Good | Good | Good | Good | Poor | Poor | Poor |
| | | Resistance to adhesive residue | Good | Good | Acceptable | Good | Good | Good | Good |

The results shown in Table 1 reveal that the double-sided adhesive tape of the present invention is excellent in appearance of the pressure-sensitive adhesive surface, is less likely to generate wrinkles in the case of taking up the tape, does not cause interlaminar fracture (delamination) upon peeling even after practical use during which heat history is loaded for a long time, and is also less likely to be torn off or to generate adhesive residue upon peeling off the double-sided adhesive tape from one side of the adherend, and is excellent in peeling property.

On the other hand, in Comparative Example 1, since the tensile strength of a nonwoven fabric base material was lower than the desired numerical value range, wrinkles were generated in the tape. In Comparative Example 2, since the nonwoven fabric base material contains a binder component and the tensile strength of the nonwoven fabric base material was lower than the desired numerical value range, the initial tape strength and tape strength after storage (tensile strengths) were poor and generation of wrinkles was recognized and, in a peeling test after storage, the tape was torn off. In Comparative Examples 3 and 4, since the initial tape strength was lower than the desired numerical value range, the interlaminar fracture area ratio remarkably increased and, in a peeling test after storage, the tape was torn off.

**Claims**

1. A double-sided adhesive tape comprising a nonwoven fabric base material containing substantially no binder component and having a tensile strength in a longitudinal direction of from 4.1 to 10.0 N/10 mm; and a pressure-sensitive adhesive layer provided on both surfaces of the nonwoven fabric base material; wherein the double-sided adhesive tape has an initial tensile strength in the longitudinal direction of 17.0 N/10 mm or more.

2. The double-sided adhesive tape according to claim 1, wherein the initial tensile strength in the longitudinal direction of the double-sided adhesive tape is at least twice the tensile strength in the longitudinal direction of the nonwoven fabric base material.

3. The double-sided adhesive tape according to claim 1 or 2, wherein the nonwoven fabric base material has a basis weight of 20 g/m$^2$ or more.

4. The double-sided adhesive tape according to any one of claims 1 to 3, wherein the nonwoven fabric base material has a thickness of from 50 to 150 $\mu$m.

5. The double-sided adhesive tape according to any one of claims 1 to 4, wherein the nonwoven fabric base material is made of Manila hemp.

6. The double-sided adhesive tape according to any one of claims 1 to 5, having an interlaminar fracture area ratio of 10% or less.

7. The double-sided adhesive tape according to any one of claims 1 to 6, having a tensile strength in the longitudinal direction after storage at 70°C for 44 days is from 14.0 to 30.0 N/10 mm.

8. The double-sided adhesive tape according to any one of claims 1 to 7, wherein, in a peeling test after pressure bonding to ABS and after storage at 70°C for 44 days, the tape is peeled off without being torn off.

9. The double-sided adhesive tape according to any one of claims 1 to 8, wherein the pressure-sensitive adhesive layer is an acryl-based pressure-sensitive adhesive layer.

10. The double-sided adhesive tape according to any one of claims 1 to 9, which is used for fixation of recycle parts.

11. Recycle parts stuck with the double-sided adhesive tape according to any one of claims 1 to 9.

12. A method for producing the double-sided adhesive tape according to any one of claims 1 to 10, comprising the steps of:

   applying a raw material liquid of the pressure-sensitive adhesive layer to the nonwoven fabric base material to impregnate the nonwoven fabric base material with the raw material liquid; and
   drying or curing the raw material liquid to form the pressure-sensitive adhesive layer which is continuous from inside to both surfaces.

**13.** The method for producing the double-sided adhesive tape according to claim 12, comprising the step of impregnating the nonwoven fabric base material with an organic solvent before the step of applying the raw material liquid of the pressure-sensitive adhesive layer to the nonwoven fabric base material to impregnate the nonwoven fabric base material with the raw material liquid.

**14.** The method for producing the double-sided adhesive tape according to claim 12 or 13, wherein the raw material liquid of the pressure-sensitive adhesive layer contains an isocyanate-based crosslinking agent and/or an epoxy-based crosslinking agent.

**15.** The method for producing the double-sided adhesive tape according to any one of claims 12 to 14, wherein the raw material liquid of the pressure-sensitive adhesive layer has a viscosity of from 0.1 to 100 Pa·s at 23°C.

Europäisches
Patentamt

European
Patent Office

Office européen
des brevets

# EUROPEAN SEARCH REPORT

Application Number

EP 10 18 8782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DATABASE WPI<br>Week 200640<br>Thomson Scientific, London, GB;<br>AN 2006-387350<br>XP002624364,<br>-& JP 2006 143856 A (NITTO DENKO CORP)<br>8 June 2006 (2006-06-08)<br>* abstract *<br>* paragraph [0012]; claims 1-6 *<br>----- | 1-15 | INV.<br>C09J7/04 |
| X,D | DATABASE WPI<br>Week 200420<br>Thomson Scientific, London, GB;<br>AN 2004-205994<br>XP002624365,<br>-& JP 2003 253228 A (DAINIPPON INK & CHEM INC) 10 September 2003 (2003-09-10)<br>* abstract *<br>* paragraph [0005] *<br>* paragraph [0024]; table 1 *<br>* paragraph [0043] - paragraph [0044]; tables 2, 3 *<br>* claims 1-6 *<br>----- | 1-11 | |
| X | EP 1 580 245 A1 (NITTO DENKO CORP [JP]) 28 September 2005 (2005-09-28)<br>* paragraph [0035] *<br>* paragraph [0050] *<br>* paragraph [0054] - paragraph [0056] *<br>* paragraph [0059] - paragraph [0062]; example 1 *<br>* paragraph [0069]; table 1 *<br>* claims 8 - 11 *<br>----- | 1-15 | TECHNICAL FIELDS SEARCHED (IPC)<br><br>C09J |

-/--

The present search report has been drawn up for all claims

| Place of search | Date of completion of the search | Examiner |
|---|---|---|
| Munich | 23 February 2011 | Siemsen, Beatrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 10 18 8782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 177 583 A1 (NITTO DENKO CORP [JP]) 21 April 2010 (2010-04-21)<br>* paragraph [0015] *<br>* paragraph [0078]; example J2; table 1 *<br>* paragraph [0087] *<br>* paragraph [0097]; example 16 *<br>* paragraph [0103] - paragraph [0104]; example 22 *<br>* paragraph [0114] - paragraph [0115]; examples 16, 22; tables 4, 5 *<br>* claims 10-12 *<br>----- | 1-15 | |

TECHNICAL FIELDS
SEARCHED      (IPC)

The present search report has been drawn up for all claims

| Place of search | Date of completion of the search | Examiner |
|---|---|---|
| Munich | 23 February 2011 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 18 8782

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2011

| Patent document cited in search report | | Publication date | Patent family member(s) | | Publication date |
|---|---|---|---|---|---|
| JP 2006143856 | A | 08-06-2006 | NONE | | |
| JP 2003253228 | A | 10-09-2003 | JP | 4240891 B2 | 18-03-2009 |
| EP 1580245 | A1 | 28-09-2005 | CN | 1670102 A | 21-09-2005 |
| | | | DE | 602005001128 T2 | 07-02-2008 |
| | | | JP | 3765497 B2 | 12-04-2006 |
| | | | JP | 2005263917 A | 29-09-2005 |
| | | | US | 2005209380 A1 | 22-09-2005 |
| EP 2177583 | A1 | 21-04-2010 | CN | 101724366 A | 09-06-2010 |
| | | | JP | 2010095609 A | 30-04-2010 |
| | | | US | 2010099317 A1 | 22-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7070527 A
- JP 9272850 A
- JP 2003253228 A
- JP 2003193006 A
- JP 2006143856 A

**Non-patent literature cited in the description**

- *Nitto Gihou,* November 1989, vol. 27 (2